# EUROPÄISCHE PATENTSCHRIFT

(11) **EP 1 512 354 B1**
(45) Veröffentlichungstag und Bekanntmachung des Hinweises auf die Patenterteilung: **16.05.2007**
(21) Anmeldenummer: 04405539.0
(22) Anmeldetag: 30.08.2004
(51) Int. Cl.: A47J 31/44

(54) **Getränkebereitungsmaschine mit universell verstellbarem Getränkeauslauf**
Beverage preparing machine with universally adjustable beverage outlet
Appareil de préparation de boissons avec tube d'écoulement universellement réglable

(30) Priorität: 02.09.2003 CH 15052003
(43) Veröffentlichungstag der Anmeldung: 09.03.2005
(73) Patentinhaber: JURA ELEKTROAPPARATE AG, 4626 Niederbuchsiten (CH)
(72) Erfinder: Reyhanloo, Shahryar, 4573 Lohn Ammannsegg (CH)
(74) Vertreter: EGLI-EUROPEAN PATENT ATTORNEYS

(56) Entgegenhaltungen:
- DE-C- 3 425 943

## Beschreibung

Die Erfindung betrifft eine Getränkebereitungsmaschine mit einem universell verstellbaren Getränkeauslauf nach Patentanspruch 1.

Die Erfindung betrifft insbesondere eine Getränkebereitungsmachine mit einem universell verstellbaren Getränkeauslauf, wobei der Getränkeauslauf zwei in einem Abstand parallel nebeneinanderliegende und vertikal angeordnete Auslaufrohre aufweist.

Getränkebereitungsmaschinen mit höhenverstellbaren Getränkeausläufen und zwei Auslaufrohren sind beispielsweise aus der DE-200 17 859-U1 bekannt. Die Höhenverstellbarkeit dient dazu, den Getränkeauslauf optimal an die unterschiedlichen Grössen bzw. Bauhöhen von Trinkgefässen, wie Kaffeetassen, Espressotassen und Trinkgläser, anpassen zu können. Der Doppelauslauf mit den zwei parallel nebeneinanderliegenden und vertikal angeordneten Auslaufrohren dient dazu, bei entsprechender Auswahl an der Getränkebereitungsmaschine gleichzeitig beispielsweise zwei Kaffeetassen mit Kaffee füllen zu können. Derartige Doppelauslaufrohre sind wegen der rationellen gleichzeitigen Herstellbarkeit von zwei Kaffeeportionen sehr bekannt und beliebt.

Ein Problem der erwähnten Getränkebereitungsmaschinen besteht darin, dass die Getränkeauslaufrohre in einem fixen Abstand parallel nebeneinanderliegend und vertikal angeordnet sind. Dies hat zur Folge, dass bei der gleichzeitigen Herstellung von zwei Getränkeportionen und bei bestimmten Tassengrössen, wie beispielsweise bei Espressotassen, die Auslaufenden der Auslaufrohre recht ungünstig über die Tassen zu liegen kommen, so dass das Unterstellen hinsichtlich der Positionierung der Tassen besondere Sorgfalt erfordert. In solchen Fällen trifft der Getränke-Flüssigkeitsstrahl oft sehr nahe am Tassenrand auf, was bei Unachtsamkeiten und im ungünstigsten Fall sogar ein Verspritzen von Kaffee zur Folge haben kann.

Die DE-34 25 943 zeigt ebenfalls einen Getränkeauslauf für einen Getränkespender, z.B. eine Espressomaschine, mit einem Doppelrohrauslauf. Dieser Auslauf hat zwei knickbare Auslaufröhrchen mit jeweils voneinander wegspreizbaren Auslaufenden. Mit einer Betätigungseinrichtung kann hier der horizontale Abstand der Auslaufenden der Auslaufröhrchen verstellt werden. Die Auslaufröhrchen sind bei dieser Vorrichtung nur in einer einzigen Stellung, nämlich bei geringstem horizontalem Abstand der Auslaufröhrchen, parallel und vertikal angeordnet. Damit besteht aber bei allen anderen horizontalen Abständen der Auslaufröhrchen wegen der Schrägstellung die Schwierigkeit mit der Beherrschbarkeit des Auftreffortes des Getränkestrahles noch immer. Als weitere Möglichkeit wird auch erwähnt, dass zwei parallele Röhrchen verschiebbar nebeneinander angeordnet sein können.

Die Aufgabe der vorliegenden Erfindung besteht darin, eine Getränkebereitungsmaschine mit einem verstellbaren Doppel-Getränkeauslauf anzugeben, bei der die Positionen der beiden Getränke-Auslaufrohre in einfacher Weise an die unterschiedlichen Verhältnisse bei den Trinkgefässen angepasst werden können.

Diese Aufgabe wird durch die Merkmale des Patentanspruchs 1 gelöst.
Die Lösung beinhaltet, dass die Auslaufrohre um vertikale Achsen schwenkbar und so in ihrem Abstand verstellbar sind.

Aus der DE-37 42 930 ist zudem eine Lösung bekannt, bei der ein Doppel-Getränkeauslauf zwar nicht in der Höhe, dafür aber horizontal von hinten nach vorn verschiebbar und zudem auch noch schwenkbar angeordnet ist. Auch diese Anordnung dient dem Ziel, die Positionen der beiden Getränke-Auslaufrohre besser an die unterschiedlichen Verhältnisse bei den Trink- und Abfüllgefässen anpassen zu können. Im Grunde handelt es sich hier lediglich um eine Höhenverstellung in drei fixen Stufen, wobei das Verschwenken und das Verschieben der jeweiligen Teile des Kaffeeauslaufe nur dazu dienen, Platz für bauhöhere Trink- oder Abfüllgefässe zu schaffen. Eine Verstellmöglichkeit des Abstands der beiden Auslaufrohre ist aber auch hier nicht vorhanden.

Bei der vorliegenden Erfindung hingegen ist der Getränkeauslauf mit den beiden in einem Abstand parallel nebeneinanderliegenden und vertikal angeordneten Auslaufrohren als Ganzes in der Höhe verstellbar. Da zudem die beiden Auslaufrohre auch noch in ihrem Abstand verstellbar sind, ergibt sich eine sehr viel grössere Flexibilität bezüglich der Anpassbarkeit an die unterschiedlichen Grössenverhältnisse bei den Trink- und Abfüllgefässen, als dies mit den bekannten Lösungen der Fall ist.

Die Abstandverstellung der Auslaufrohre kann technisch in verschiedener Weise realisiert werden, beispielsweise so, dass nur das eine Auslaufrohr horizontal verstellbar gemacht wird, vorzugsweise aber so, dass die beiden Auslaufrohre um vertikale Achsen schwenkbar und so in ihrem Abstand gemeinsam verstellbar sind. Dies ist im vorliegenden Zusammenhang so zu verstehen, dass bei einer seitlichen Verstellung des einen Auslaufrohres das andere Auslaufrohr im gleichen Mass seitlich mitverstellt wird. Wird nämlich zur Erzielung der gemeinsamen Verstellbarkeit des Abstandes der beiden Auslaufrohre pro Auslaufrohr ein Zahnrad oder ein Zahnradteilstück verwendet, wobei die jeweiligen Zahnräder oder Zahnradteilstücke ineinandergreifen, so ergibt sich eine besonders einfache technische Lösung. Die Handhabung zur Verstellung ist dann sehr einfach und es ergibt sich zudem ein ästhetisch ansprechendes und symmetrisches Design des Auslaufteiles.

Ein Ausführungsbeispiel der vorliegenden Erfindung wird anhand von Zeichnungen näher erläutert.

In den Zeichnungen zeigen:
- Fig. 1: eine Frontansicht einer Getränkebereitungsmaschine mit einem höhenverstellbaren Getränkeauslauf und zwei abstandverstellbaren Auslaufrohren,
- Fig. 2: eine prinzipielle Horizontalschnitt-Darstellung eines Getränkeauslaufs für eine Getränkebereitungsmaschine nach Fig. 1 mit den zwei Auslaufrohren in maximalem Abstand, und
- Fig. 3: eine prinzipielle Horizontalschnitt-Darstellung des Getränkeauslaufs gemäss Fig. 2 mit den zwei Auslaufrohren in minimalem Abstand.

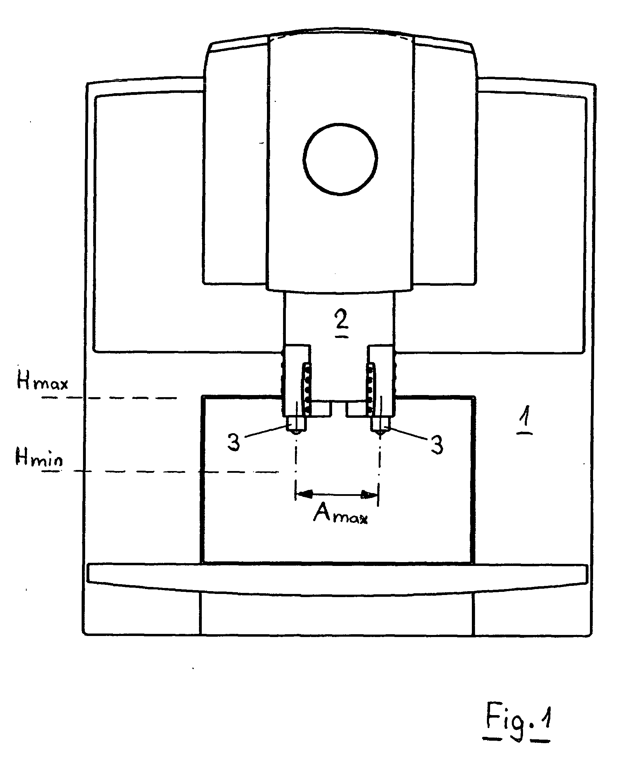

Die Fig. 1 zeigt eine Frontansicht einer Getränkebereitungsmaschine 1 mit einem höhenverstellbaren Getränkeauslauf 2 und zwei abstandverstellbaren Auslaufrohren 3. Der Getränkeauslauf 2 ist dabei vertikal zwischen einer maximalen Auslaufhöhe Hₘₐₓ und einer minimalen Auslaufhöhe Hₘᵢₙ verschiebbar. In dieser Darstellung befindet sich der Getränkeauslauf in einer mittleren Auslaufhöhe. Der Abstand A zwischen den beiden Auslaufrohren 3 ist verstellbar und ist hier auf den maximalen Abstand Aₘₐₓ eingestellt.

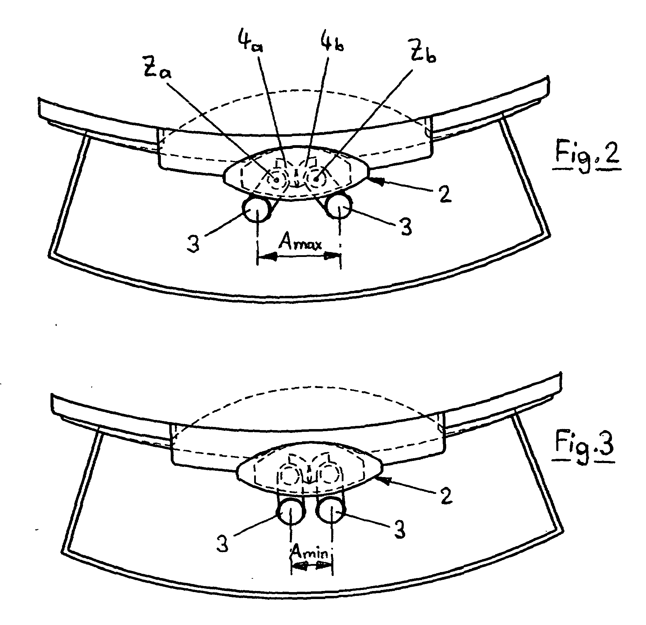

Die Fig. 2 zeigt eine prinzipielle Horizontalschnitt-Darstellung des Getränkeauslaufs 2 für eine Getränkebereitüngsmaschine 1 nach Fig. 1 mit den zwei Auslaufrohren 3 im maximalen Abstand Aₘₐₓ. Die Auslaufrohre 3 sind von abgekröpfter Bauart und jeweils um die vertikalen Achsen Za, Zb schwenkbar.

Zur gemeinsamen Verstellbarkeit des Abstandes der beiden Auslaufrohre 3 ist pro Auslaufrohr ein Zahnrad oder ein Zahnradteilstück 4a, 4b vorhanden, wobei die Zahnräder oder Zahnradteilstücke 4a, 4b mit ihren Verzahnungen ineinandergreifen.

Wird somit eines der Auslaufrohre 3 um die jeweilige Drehachse Z geschwenkt, so erfährt das andere Auslaufrohr wegen der Kopplung über die Verzahnung der Zahnräder oder ein Zahnradteilstücke 4a, 4b die gleiche Bewegung im gegenläufigen Sinn. Auf diese Weise kann der Abstand zwischen den beiden Auslaufrohren sehr leicht in einem Bereich zwischen Aₘₐₓ und Aₘᵢₙ verstellt werden.

Die Fig. 3 zeigt schliesslich noch eine prinzipielle Horizontalschnitt-Darstellung des Getränkeauslaufs 2 gemäss Fig. 2 mit den zwei Auslaufrohren 3 im minimalen Abstand Aₘᵢₙ.

Zur Erzielung der gemeinsamen Verstellbarkeit des Abstandes zwischen den beiden Auslaufrohren können auch andere Mechanismen, wie beispielsweise Zahnstangengetriebe, Reibradgetriebe oder gekreuzte Riemengetriebe, eingesetzt werden.

Es hat sich als zweckmässig erwiesen, den Abstand A zwischen den beiden Auslaufrohren (3) von einem kleinsten Abstand Aₘᵢₙ bis zu einem grössten Abstand Aₘₐₓ von etwa 60 mm stufenlos verstellbar zu machen.

Die so erzielte Verstellbarkeit des Abstandes zwischen den beiden Auslaufrohren 3 bringt nicht nur eine Verbesserung für den Fall, dass nur eine einzige sehr kleine Tasse verwendet wird, sondern auch in all jenen Fällen bei denen zwei Tassen verwendet werden.

## Patentansprüche

1. Getränkebereitungsmaschine (1) mit einem höhenverstellbaren Getränkeauslauf (2), wobei der Getränkeauslauf (2) zwei in einem Abstand parallel nebeneinanderliegende und vertikal angeordnete Auslaufrohre (3) mit Auslaufenden aufweist, und ein horizontaler Abstand A zwischen den Auslaufenden der Auslaufrohre (3) einstellbar ist und wobei die Auslaufenden der Auslaufrohre (3) in jedem Abstand A vertikal ausgerichtet sind, **dadurch gekennzeichnet, dass** zur Verstellung des Abstands A die Auslaufrohre (3) um vertikale Achsen (Za, Zb) schwenkbar sind.

2. Getränkebereitungsmaschine nach Patentanspruch 1, **dadurch gekennzeichnet, dass** die Auslaufrohre (3) in ihrem Abstand A gemeinsam verstellbar sind.

3. Getränkebereitungsmaschine nach Patentanspruch 2, **dadurch gekennzeichnet, dass** zur gemeinsamen Verstellbarkeit des Abstandes A der beiden Auslaufrohre pro Auslaufrohr (3) ein Zahnrad oder ein Zahnradteilstück (4) vorhanden ist und die Zahnräder oder Zahnradteilstücke (4) ineinandergreifen.

4. Getränkebereitungsmaschine nach Patentanspruch 2, **dadurch gekennzeichnet, dass** zur gemeinsamen Verstellbarkeit des Abstandes A der beiden Auslaufrohre (3) ein Zahnstangengetriebe, ein Reibradgetriebe oder ein gekreuztes Riemengetriebe vorhanden ist.

5. Getränkebereitungsmaschine nach einem der Patentansprüche 1 bis 4, **dadurch gekennzeichnet, dass** der Abstand A zwischen den Auslaufenden der beiden Auslaufrohre (3) von einem kleinsten Abstand Aₘᵢₙ bis zu einem grössten Abstand Aₘₐₓ stufenlos verstellbar ist.

## Claims

1. A drink preparation machine (1) with a height-adjustable drink outlet (2), wherein the drink outlet (2) comprises two outlet tubes (3) arranged vertically and lying beside one another in parallel at a distance, and a horizontal spacing A between the outlet ends of the outlet tubes (3) is adjustable and wherein the outlet ends of the outlet tubes (3) are orientated vertically at each spacing A, **characterised in that** the outlet tubes (3) can be swivelled about vertical axes (Za, Zb) in order to adjust spacing A.

2. The drink preparation machine according to claim 1, **characterised in that** the outlet tubes (3) are jointly adjustable in their spacing A.

3. The drink preparation machine according to claim 2, **characterised in that** a toothed wheel or a toothed wheel section (4) is present per outlet tube (3) for the common adjustability of spacing A of the two outlet tubes and the toothed wheels or toothed wheel sections (4) engage into one another.

4. The drink preparation machine according to claim 2, **characterised in that** a rack-and-pinion gear, a friction gear or a crossed belt-gear is present for the common adjustability of spacing A of the two outlet tubes (3).

5. The drink preparation machine according to any one of claims 1 to 4, **characterised in that** spacing A between the outlet ends of the two outlet tubes (3) is steplessly adjustable from a smallest spacing Aₘᵢₙ to a largest spacing Aₘₐₓ.

## Revendications

1. Machine de préparation de boissons (1) comportant une sortie de boisson (2) réglable en hauteur, la sortie de boisson présentant deux tuyaux de sortie (4) dotés d'extrémités de sortie, juxtaposés parallèlement à une distance l'un de l'autre et disposés verticalement, et une distance horizontale A pouvant être réglée entre les extrémités de sortie des tuyaux de sortie (3) et les extrémités de sortie des tuyaux de sortie (3) étant placées verticalement pour chaque distance A, **caractérisée en ce que**, pour régler la distance A, les tuyaux de sortie (3) pivotent autour d'axes verticaux (Za, Zb).

2. Machine de préparation de boissons selon la revendication 1, **caractérisée en ce que** la distance entre les tuyaux de sortie (3) peut être réglée conjointement.

3. Machine de préparation de boissons selon la revendication 2, **caractérisée en ce qu'**une roue dentée ou un élément de roue dentée (4) est prévu par tuyau de sortie (3) pour le réglage conjoint de la distance A entre les deux tuyaux de sortie et **en ce que** les roues dentées ou éléments de roue dentée (4) s'engrènent l'un dans l'autre.

4. Machine de préparation de boissons selon la revendication 2, **caractérisée en ce qu'**un mécanisme à roue de friction ou un mécanisme à courroie croisée est prévu pour le réglage conjoint de la distance A des deux tuyaux de sortie (3).

5. Machine de préparation de boissons selon l'une quelconque des revendications 1 à 4, **caractérisée en ce que** la distance A entre les extrémités de sortie des deux tuyaux die sortie (3) peut être réglée en continu entre une distance minimale Aₘᵢₙ et une distance maximale Aₘₐₓ.
